(19)

Europäisches
Patentamt
European
Patent Office
Office européen
des brevets

(11)  **EP 1 983 799 B1**

(12)  **EUROPEAN PATENT SPECIFICATION**

(45)  Date of publication and mention
of the grant of the patent:
**07.07.2010  Bulletin 2010/27**

(51)  Int Cl.:
**H04R 3/00** *(2006.01)*  **G01S 3/808** *(2006.01)*

(21)  Application number: **07007817.5**

(22)  Date of filing: **17.04.2007**

(54)  **Acoustic localization of a speaker**

Akustische Lokalisierung eines Sprechers

Localisation acoustique de parleur

(84)  Designated Contracting States:
**AT BE BG CH CY CZ DE DK EE ES FI FR GB GR
HU IE IS IT LI LT LU LV MC MT NL PL PT RO SE
SI SK TR**

(43)  Date of publication of application:
**22.10.2008  Bulletin 2008/43**

(73)  Proprietor: **Harman Becker Automotive Systems
GmbH
76307 Karlsbad (DE)**

(72)  Inventors:
• **Buck, Markus
88400 - Biberach (DE)**
• **Haulick, Tim
89143 - Blaubeuren (DE)**

• **Schmidt, Gerhard
89081 - Ulm (DE)**
• **Wolff, Tobias
89073 - Ulm (DE)**

(74)  Representative: **Grünecker, Kinkeldey,
Stockmair & Schwanhäusser
Anwaltssozietät
Leopoldstrasse 4
80802 München (DE)**

(56)  References cited:
**EP-A- 1 544 635        EP-A- 1 551 205
WO-A-2006/011650     FR-A- 2 817 973
JP-A- 2002 156 451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of Invention**

The present invention relates to the art of the localization of speakers, in particular, speakers communicating with remote parties by means of hands-free sets or speakers using a speech recognition means. Particularly, the present invention relates to the localization of a person or a speaker by means of the transmission and reception of acoustic signals.

**Background of the invention**

The localization of one or more speakers (communication parties) is of importance in the context of many different electronically mediated communication situations where multiple microphones, e.g., microphone arrays or distributed microphones are utilized. For example, the intelligibility of speech signals that represent utterances of users of handsfree sets and are transmitted to a remote party heavily depends on an accurate localization of the speaker. If accurate localization of a near end speaker fails, the transmitted speech signal exhibits a low signal-to-noise ratio (SNR) and may even be dominated by some undesired perturbation caused by some noise source located in the vicinity of the speaker or in the same room in which the speaker uses the hands-free set.

Audio and video conferences represent other examples in which accurate localization of the speaker(s) is mandatory for a successful communication between near and remote parties. The quality of sound captured by an audio conferencing system, i.e. the ability to pick up voices and other relevant audio signals with great clarity while eliminating irrelevant background noise (e.g. air conditioning system or localized perturbation sources) can be improved by a directionality of the voice pick up means.

WO 2006/011650 A2 discloses an acoustic wave sensor comprising a wave transmitter for transmitting an acoustic wave and a wave receiver for receiving reflected waves reflected by an object the distance and orientation of which is to be determined.

EP 1 544 635 A1 discloses a sound source search system comprising a baffle and a plurality of loudspeakers and microphones arranged on the surface of the baffle and a signal processing unit for determining amplitude and phase characteristics of reflected sound waves corresponding to sound waves output by the loudspeakers.

JP 20027 078545 discloses provision of a loudspeaker array and a microphone array to provide an object detection system detecting the position and direction of an object wherein a search voice signal is input into the speaker array and focuses of a voice beam and a sound collecting beam are adjusted by means of a directivity control section.

In the context of speech recognition and speech control the localization of a speaker is of importance in order to provide the speech recognition means with speech signals exhibiting a high signal-to-noise ratio, since otherwise the recognition results are not sufficiently reliable.

Acoustic localization of a speaker is based on the detection of transit time differences of sound waves representing the speaker's utterances and allows for the determination of the direction of the speaking person. The determination of the distance of the speaking person is more difficult since the speaker may be in the far field of the array. Therefore a big spatial dimension of the array or distributed microphones is necessary to detect the distance. In the art, microphone arrays are used in combination with beamforming means (see, e.g., B.D. van Veen and K.M. Buckley, "Beamforming: a versatile approach to spatial filtering", IEEE ASSP Magazine, vol. 5, no. 2, pp. 4 - 24, April 1988) in order to localize an actually speaking person, e.g., in an audio conference room. The beamforming means combines the individual microphone signals obtained by the microphones constituting the microphone array to amplify signals from a preferred direction and to steer a sharp null towards an offending noise source.

The beamformer can be an adaptive weighted sum beamformer that combines preprocessed, in particular, time delayed microphone signals $x_{T,m}$ of M microphones to obtain one output signal $Y_w$ with an improved SNR:

$$Y_w = \sum_{m=1}^{M} a_m \, x_{T,m} \, .$$

Beamforming must be temporally adapted in the case of a moving speaker. In this case, the weights $a_m$ are not time-independent as in a conventional delay-and-sum-beamformer, but have to be recalculated repeatedly as is required, e.g., to maintain sensitivity in the desired direction and to minimize sensitivity in the directions of noise sources.

However, such kind of localization of a speaker can only be performed when the speaker is actually speaking. This implies that, in particular, in the case of a quickly moving speaker targeting the speaker by the beamforming means needs some time after each speech pause thereby easily resulting in some distorted transmission of speech signals representing the beginning of an utterance after a speech pause made by the speaker. Moreover, the above-mentioned method for localization of a speaker is error-prone in acoustic rooms that exhibit a significant reverberation.

Therefore, there is a need for a method for a more reliable localization of a speaker that, in particular, does not depend on the speaker's actual utterances.

**Description of the Invention**

In the following a method for localization of a person (a speaker) in a room in that at least one loudspeaker and at least one microphone array are located not being part of the invention but helpful for understanding the same is described.

According to the comparative example, the method comprises outputting sound by the at least one loudspeaker such that the sound is at least partly reflected by the person (the speaker);

detecting the sound output by the at least one loudspeaker and at least partly reflected by the person (the speaker) by the microphone array to obtain microphone signals for each of the microphones constituting the microphone array; and

determining the person's (speaker's) direction towards and/or distance from the microphone array on the basis of the microphone signals.

The position of the speaker is determined by the detection of the sound (acoustic signal) output by the at least one loudspeaker that is reflected by the body of the speaker and not by the speakers actual utterance as in the art. The reflections arrive after different sound transit times and from different directions at the microphone array. By the speaker's body reflections of the sound emitted by the at least one loudspeaker both the speaker's direction towards and distance from the microphone array can be determined. Herein, by the expression "speaker" a person is meant that may or may not be actually speaking (at least he is expected to speak at some time, since he is using some communication system).

The localization of the speaker can be completed before he actually starts speaking and, thus, the relevant parameters for the speech signal processing which depend on the speaker's position (e.g., the steering angle of a beamformer) can be adapted before the speaker starts speaking. Thereby, it is guaranteed that the very beginning of the utterance can readily be transmitted to a remote party with a high SNR or that a speech recognition means is enabled to reliably recognize the very beginning of a detected verbal utterance.

The method can easily be implemented without significant costs in communication systems that already include at least one loudspeaker and a microphone array as, e.g., audio or video conference rooms or living rooms provided with an advanced voice control for a HIFI device. Commonly available handsfree sets also include a loudspeaker and a microphone array and can easily adapted for implementation of the inventive method.

In particular, more than one loudspeaker can be used each emitting sound in form of an audio signal that is uncorrelated from the audio signals emitted form the other ones of the loudspeakers. For each of the emitted audio signals the direction and distance of the speaker can be determined from the reflections by the speaker's body and some average value can be determined from the results for each of the uncorrelated audio signals emitted by the multiple loudspeakers. Thereby, a more robust and reliable localization of the speaker may be achieved. No special signal is required. The signal from the remote party or the music playback can be used. Thus, the localization operates without any notice by the user.

The method not being part of the invention further comprises beamforming of the microphone signals to obtain at least one beamformed signal and wherein the speaker's direction towards and/or distance from the microphone array is determined on the basis of the at least one beamformed signal. The beamforming can be performed by means of a delay-and-sum beamformer or a filter-and-sum beamformer (see, e.g., "Adaptive beamforming for audio signal acquisition", by Herbordt, W. and Kellermann, W., in "Adaptive signal processing: applications to real-world problems", p.155, Springer, Berlin 2003; B.D. van Veen and K.M. Buckley, "Beamforming: a versatile approach to spatial filtering", IEEE ASSP Magazine, vol. 5, no. 2, pp. 4 - 24, April 1988).

By beamforming the microphone signals for different directions the direction from which sound arrives at the microphone array that is reflected by the speaker can readily be detected, since sound coming from this direction shows a higher energy level of the sound (and, thus, a higher SNR) than coming from a different direction apart from the direction towards the loudspeaker itself.

The method not being part of the invention may comprise estimating the impulse responses of the loudspeaker - room - microphone system (or the transfer functions for processing in Fourier space) for at least some of the beamformed signals in which case the speaker's direction towards and/or distance from the microphone array can be determined on the basis of the estimated impulse responses. As known in the art, the impulse responses for different directions of the employed beamforming means represent a reliable measure for the energy levels of sound coming from the different directions and, thus, allow for a reliable localization of the speaker. The estimation of the impulse responses can be performed, e.g., by an echo compensation filtering means as known in the art (see, e.g., EP 1020068 B1).

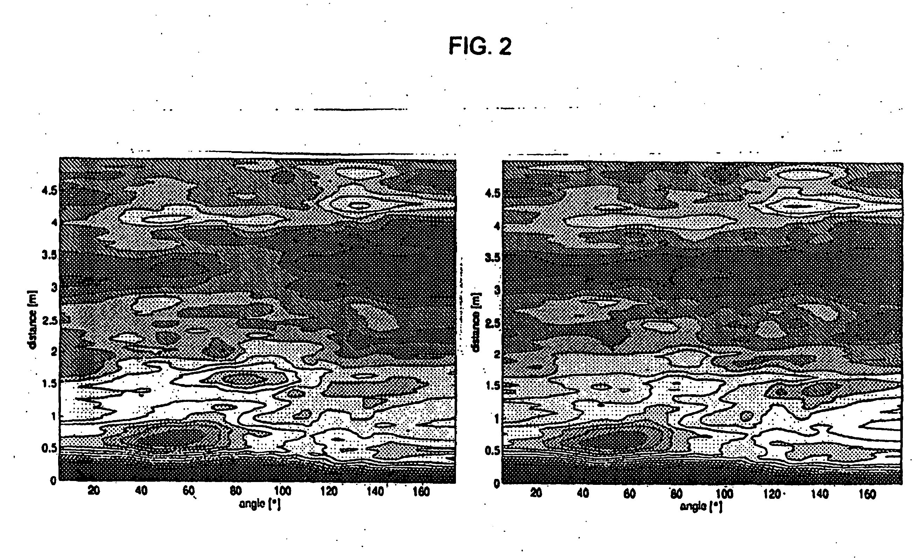

In particular, the energy responses can be determined from the estimated impulse responses by calculating the squared magnitude of the impulse responses. By means of these energy responses a direction - distance diagram can be generated and properly used for the localization of the speaker (see also detailed discussion below and, in particular, Figure 2). The energy responses are plotted against the angular direction the microphone array is steered to by the beamforming means and the distance (of a source of the detected sound waves, in particular, a reflection source) to the microphone array derived from the sound speed and the time delays of different microphone signals for different directions.

For example, the localization of the speaker can be achieved by simply determining the local maxima of the generated direction - distance diagram and assigning one of the local maxima to the speaker's position. In principle, different local maxima (representing sound sources) are present in the direction - distance diagram due to the loudspeaker itself, reflecting walls of the acoustic room wherein the speaker and the loudspeaker as well as the microphone array are located an the speaker. The stationary maxima can be determined beforehand (without any speaker present in the acoustic room). In particular, a reference direction - distance diagram can be generated and stored representing the energy responses for the acoustic room without any person.

In this case, the method not being part of the invention comprises generating a reference direction - distance diagram and subtracting the direction - distance diagram and the reference direction - distance diagram from each other to obtain a differential direction - distance diagram and the speaker's direction towards and/or distance from the microphone array is determined on the basis of the differential direction - distance diagram, e.g., by determining the local maxima of the energy responses.

The energy responses h(k) are smoothed over k (i.e., within the impulse response interval, where k denotes the time index for the impulse response) in order to eliminate some fine structure which is of no interest and could only deteriorate the determination of local maxima.

The above described comparative examples of the herein disclosed method can be readily implemented in existing handsfree sets. However, the signal processing has to be performed largely in real time, in particular, both the beamforming and the estimating of the impulse responses. The latter is due to the fact that the estimation of the impulses responses of the loudspeaker-room-microphone system (e.g. by echo compensation filtering means) is based on audio signals input in the at least one loudspeaker. The actual localization of the speaker can be performed at some arbitrary time by reading the estimated impulse responses (which are determined in real time and may be buffered) and, e.g., generating a direction - distance diagram or a differential direction - distance diagram based on the read impulse responses.

Thus, according to the present invention it is provided a method that shows a lower demand for computational resources. According to claim 1 the method for localization of a speaker in a room in that at least one loudspeaker and at least one microphone array are located, comprises the steps of outputting sound by the at least one loudspeaker such that the sound is at least partly reflected by the person;
detecting the sound output by the at least one loudspeaker and at least partly reflected by the person by the microphone array to obtain microphone signals for each of the M microphones constituting the microphone array;
wherein
estimating the impulse responses of the loudspeaker- room - microphone system for at least some of the M microphone signals and beamforming the estimated impulse responses for a number of predetermined directions to obtain L > M beamformed impulse responses;
determining the energy response from the L beamformed impulse responses; and
determining the speaker's direction towards and/or distance from the microphone array on the basis of the determined energy response.

For M microphone signals only L beamformed signals (M < L) are obtained by applying the beamforming means to the impulse responses (see detailed description below) and the beamformed signals need not to be determined in real time but rather off-line, e.g., every few seconds only. Moreover, the beamforming can be restricted to some time interval of the entire impulse response h(k), where k denotes the time index for the impulse response. For example, beamforming may be restricted to $k \in [k_{min}, k_{max}]$, in which, e.g., $k_{min}$ is determined from the signal transit time for a sound wave that is radiated by the loudspeaker directly (without reflections) to the microphone array and $k_{max}$ is determined from the signal transit time for a sound wave that is radiated by the loudspeaker to a distant wall of the acoustic room and reflected by this wall to the microphone array (maximum signal transit time).

As in the comparative examples described above in which beamforming is performed before the estimation of the impulse responses, the energy responses from the beamformed impulse responses can be determined and used for generating a direction - distance diagram (or a differential direction - distance diagram) based on the determined energy responses. Subsequently, the speaker's direction towards and/or distance from the microphone array is determined on the basis of the thus generated direction - distance diagram, e.g., simply by determining the local maxima.

It might be preferred to filter, in particular, by a bandpass filtering means, the estimated or beamformed impulse responses to obtain filtered impulse responses which are used for determining the respective energy responses. For instance, some frequency range of the impulse responses is extracted by bandpass filtering for which the employed beamforming means shows a high directionality. Thereby, the directional resolution can be increased and, in addition, the computational load can be reduced.

In another embodiment a loudspeaker array is used to output sound that after reflection by a speaker who is to be localized is detected by the microphone array. Thus, according to this embodiment

the sound is consecutively output by a loudspeaker array in a respective one of a number of predetermined directions; and

the microphone array is consecutively steered to the respective one of the number of predetermined directions by a beamforming means, i.e. beamforming of the microphone signals to obtain a beamformed signal for the respective one of the predetermined directions is performed,

the impulse responses of the loudspeaker- room - microphone system for at least some of the beamformed signals are estimated;

and

the speaker's direction towards and/or distance from the microphone array is determined on the basis of the estimated impulse responses.

At each discrete time n (where n is the discrete time index of the microphone signals) one single direction is examined and spatial scanning is performed by simultaneous stirring both the loudspeaker array and the microphone array by respective beamforming means. By means of horizontal linear the loudspeaker and microphone arrays with centers arranged in the same vertical axis the acoustic room can efficiently be scanned in the horizontal direction. According to this embodiment, the beamformed microphone signals mainly contain directly arriving or reflected sound from the respective direction of origin of the sound and compared to the previous examples a smaller contribution of sound coming from other directions. Again, energy responses can be determined and a (differential) distance - direction diagram can be generated on the basis of the estimated impulse responses in order to localize the speaker.

The sound (audio signal) output by the at least one loudspeaker according to one of the preceding examples, may be in an inaudible range, e.g., with a frequency above 20 kHz. Employment of inaudible sound is particularly preferred for the embodiments comprising a steerable loudspeaker array, since the control of different directions of output sound might give rise to an artificial listening experience in the case of music or voice output by the loudspeakers.

The above-mentioned problem is also solved by a communication system according to claim 7.

The present invention also provides a handsfree set, audio or video conference system, a speech control means or a speech recognition means comprising or being identical with a communication system according to one of the above-mentioned examples. In these devices and systems the inventive communication system can advantageously be incorporated. By accurate localization of a speaker the overall operation can significantly be improved. For instance, the microphone sensitivity and output volume of a handsfree set may be adjusted in dependence on the determined speaker's position. Moreover, reliable operation of a speech control means or a speech recognition means can be significantly improved by steering a microphone array towards the determined speaker's position thereby enhancing the quality of the detected speech signal representing a speaker's utterance.

Furthermore, the present invention provides a computer program product comprising one or more computer readable media having computer-executable instructions for controlling and/or performing the steps of the examples od the herein disclosed method.

Additional features and advantages of the present invention will be described with reference to the drawings. In the description, reference is made to the accompanying figures that are meant to illustrate comparative examples not being part of the present invention and preferred embodiments of the invention. It is understood that such embodiments do not represent the full scope of the invention.

Figure 1 illustrates reflections of sound output by a loudspeaker in an acoustic room in that a loudspeaker and a microphone array are installed and a person is present.

Figure 2 shows an example of a distance - direction diagram used for the localization of a speaker in an embodiment of the present invention.

Figure 3 illustrates an example not being part of the invention comprising a beamfoming means for obtaining beamformed microphone signals and an echo compensation filtering means for estimating impulse responses.

Figure 4 illustrates an embodiment of the invention comprising an echo compensation filtering means for estimating impulse responses and a beamfoming means for obtaining beamformed impulse responses.

Figure 5 shows a flow chart of basic steps of an example of the inventive method for the localization of a speaker.

Figure 6 shows another comparative example not being part of the invention comprising a loudspeaker array and a loudspeaker beamformer for directional output of sound.

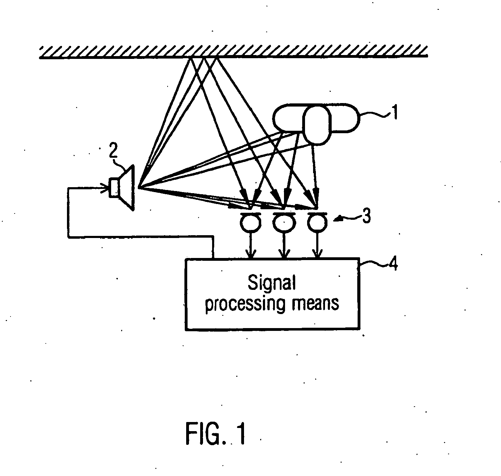

As illustrated in Figure 1, in the present invention localization of a speaker 1 in an acoustic room is achieved by means of an acoustic signal or sound output by at least one loudspeaker 2 and detected by a microphone array 3 after reflection by the speaker's body. The sound output by the loudspeaker 2 partly hits the wall of the room, the speaker's body and partly directly arrives at the microphone array 3. The sound radiated by the loudspeaker 2 may, e.g., represent a speech output by a remote communication party. Sound waves output by the loudspeaker 2, thus, arrive after different sound transit times at the microphone array 3 depending on whether they are radiated directly to the microphone array or are reflected by the wall or the speaker's body.

The individual microphones of the microphone array 3 output microphone signals representing the detected sound to a signal processing means 4. The signal processing means 4 comprises a beamforming means, e.g., a delay-and-sum beamformer or a filter-and-sum beamformer, for beamforming the microphone signals $x_m(n)$ where n is the discrete time index of the microphone signals. For instance, beamforming in L directions may be performed and the impulse responses of the loudspeaker-room-microphone system can be compared for each of the directions L. The impulse responses can be determined by echo compensation filtering means as known in the art.

When the beamforming means is directed towards the loudspeaker 2 the acoustic signal output by the loudspeaker 2 is directly detected and the impulse response is high. When the beamforming means is directed towards the speaker 1 the impulse response represents the sound reflected by the speaker 1 towards the microphone array 3 thereby indicating the directional angle of the speaker 1.

Moreover, if the position of the loudspeaker 2 is known, the distance of the speaker 1 from the microphone array 3 can be derived by detecting the time lag of the impulse response for the direction towards the speaker 1 with respect to the impulse response for the direction towards the loudspeaker 2. The time lag (difference in sound transit times) corresponds to the transit time of sound from the loudspeaker 2 to the speaker 1 and then to the microphone array 3. If, e.g., the loudspeaker 2 is located close to the microphone array 3, the distance of the speaker is derived from half of the transit time times the sound speed.

In particular, the localization of the speaker based on the impulse responses $h_l(k, n)$, where k is the discrete time index within the time interval of the impulse response, may be carried out as follows. For each direction I = 1, .., L the energy responses are calculated $p_l(k, n) = |h_l(k, n)|^2$ and then preferably smoothed over k in time. Subsequently, the smoothed energy responses can be combined (see Figure 2) in a direction - time diagram or a direction - distance diagram (time and distance are related to each other simply by the sound speed). Local maxima are caused by objects that reflect sound, e.g., one or more speakers and the walls of the acoustic room. In the example shown in Figure 2, the loudspeaker located at a distance of 0.6 m at an angle of 55° with respect to the microphone array and a speaker (person) located at a distance of 1.6 m at an angle of 80° with respect to the microphone array can be identified.

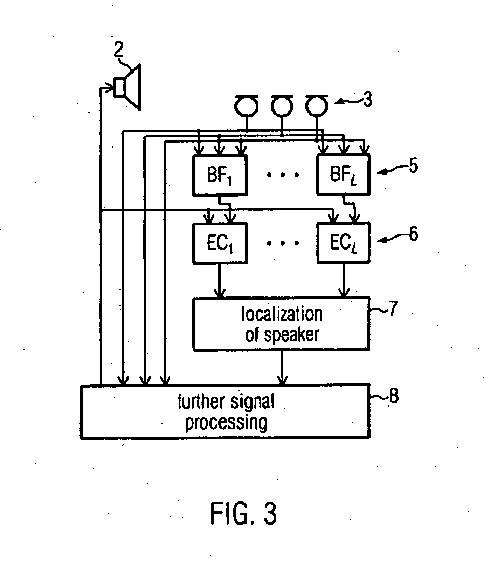

An example not being part of the present invention is shown in Figure 3. A beamforming means 5 is configured to beamform microphone signals obtained by a microphone array 3 that represent detected sound output by a loudspeaker 2 and at least partly reflected by a speaker's body.

The beamforming means 5 performs beamforming for L directions thereby scanning the acoustic room in which the loudspeaker 2, the speaker to be localized and the microphone array 3 are present. In this example, the beamforming means 5 is a delay-and-sum beamformer that delays the individual microphone signals $x_m(n)$ (where n is the discrete time index) from M = 3 microphones constituting the microphone array 3 such that phase balance is achieved for the respective direction of the directions L that is actually considered. The beamformed signal is represented by

$$x_{BF}(n) = \sum_{m=1}^{M} a_m x_m(n - d_m)$$

with weight factors $a_m$ and delay parameters $d_m$.

For each of the L directions the impulse responses of the loudspeaker-room-microphone system are determined by an echo compensation filtering means 6.

It is noted that such an echo compensation filtering means (see, e.g., E. Hänsler and G. Schmidt: "Acoustic echo and noise control: a practical approach", John Wiley & Sons, Hoboken, NJ (USA), 2004) is usually employed in handsfree sets. Thus, the inventive method can be readily implemented in existing handsfree sets. Localization of the speaker 7 can be determined from the L impulse responses for the L beamformed signals. Based on the microphone signals and/or the output of the unit for localization of the speaker 7 further signal processing may occur. For instance, the steering angle of the beamforming means 5 can be adjusted to the actual speaker's position as determined by the unit for localization of the speaker 7. Moreover, the output by the loudspeaker 2 may be adapted according to the determined speaker's position. For instance, the volume of the output sound may be controlled depending on the speaker's position. Moreover, the sensitivity of the microphone array 3 may be adapted in accordance with the determined speaker's distance.

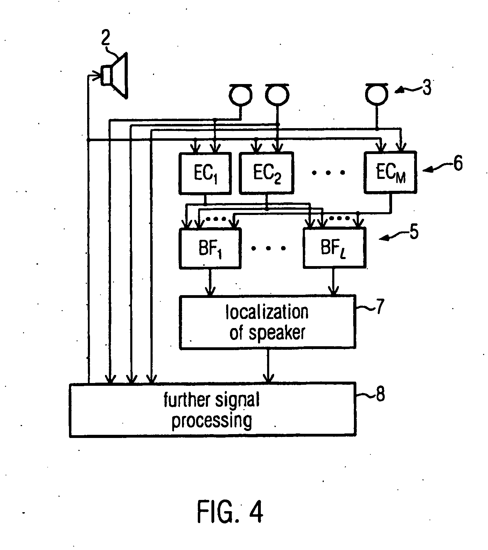

Figure 4 illustrates an embodiment of the present invention. Compared to the comparative example shown in Figure 3 computational costs are reduced in this example. First, the impulse responses $h_m(k, n)$, where k is the discrete time index within the time interval of the impulse response, are determined for M microphone signals. The impulse responses obtained by the echo compensation filtering means 6 are then processed by the beamforming means 5 to obtain

$$h_l(k, n) = \sum_{m=1}^{M} a_m h_m(k - d_{m,l}, n) \ , l = 1, .., L \ .$$

The beamforming means 5, thus, outputs spatially filtered impulse responses. If necessary, some oversampling may be carried out for the microphone signals in order to achieve a higher angle resolution. Since usually $L > M$, less impulse responses are to be estimated as compared to the embodiment shown in Figure 3. In addition, it is not necessary for the beamforming means 5 to operate in real time (different from the echo compensation filtering means 6 that has to be adapted for each n). For instance, the beamforming means may operate every few seconds.

In particular, the beamforming can be restricted to some relevant time interval of the impulse response $[k_{min}, k_{max}]$, in which, e.g., $k_{min}$ is determined from the signal transit time for a sound wave that is radiated by the loudspeaker 2 directly (without reflections) to the microphone array 3 and $k_{max}$ is determined from the signal transit time for a sound wave that is radiated by the loudspeaker 2 to a distant wall of the acoustic room and reflected by the wall to the microphone array 3 (maximum signal transit time).

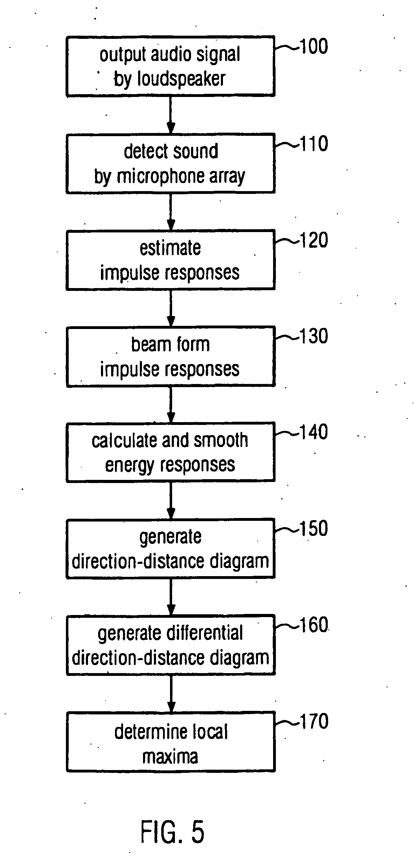

Figure 5 illustrates basic steps of the inventive method according to the embodiment shown in Figure 4. Sound (an audio signal) is output 100 by the loudspeaker and detected 110 by the microphone array. The sound output by the loudspeaker is partly reflected by a speaker. From the microphone signals obtained by the microphone array impulse responses are estimated 120 und subsequently processed 130 by the beamforming means. From the beamformed impulse responses the energy responses are calculated (by the taking the squared magnitudes of the impulse responses) and temporally smoothed 140 (see above).

By means of the calculated smoothed energy responses a two-dimensional direction - distance diagram is generated 150 similar to the one shown in Figure 2. According to the present example, this diagram is subtracted from a reference diagram in order to generate a differential direction - distance diagram 160. The reference diagram is a direction - distance diagram generated beforehand from impulse responses obtained for the acoustic room without any persons or other temporally appearing and disappearing objects present, i.e. the reference direction - distance diagram is based on the impulse response for L directions of the unperturbed loudspeaker-room-microphone system.

In the differential direction - distance diagram local maxima of the smoothed energy responses are determined 170 in order to localize one or more speakers in terms of the distance from and the angular direction towards the microphone array.

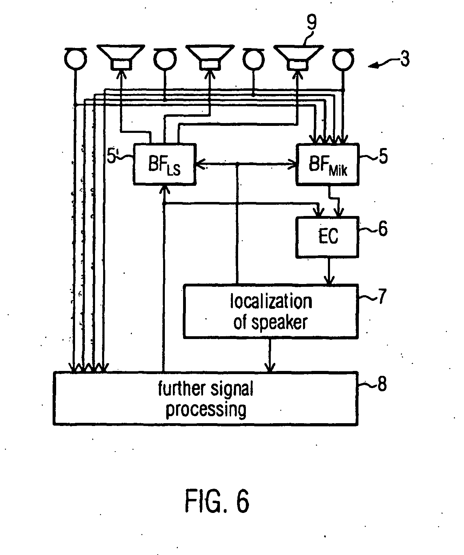

In Figure 6 another comparative example not being part of the present invention is shown in which a loudspeaker array 9 rather than a single loudspeaker is employed. Controlled by a loudspeaker beamformer 5' the loudspeaker array 9 consecutively radiates sound at different directions. The microphone array 3 is beamformed accordingly in the same direction as the loudspeaker array 9 by a microphone beamforming means 5. Thus, at each time n one direction is examined and an entire range of angular directions has to be sequentially scanned by the loudspeaker beamformer 5' and the microphone beamforming means. In this embodiment the respective microphone signals exhibit less noise from directions other than the respective predetermined one. However, the sound output by the loudspeakers of the loudspeaker array is somewhat artificially modified due the control by the loudspeaker beamformer 5'. Thus, it might be preferred to restrict the beamforming of the output of the audio signal to a very narrow frequency range or to output an inaudible audio signal for the localization of the speaker.

All previously discussed embodiments are not intended as limitations but serve as examples illustrating features and advantages of the invention. It is to be understood that some or all of the above described features can also be combined in different ways.

**Claims**

1.   Method for localization of a person (1) in a room in that at least one loudspeaker (2) and at least one microphone array (3) are located, comprising the steps of

outputting sound by the at least one loudspeaker (2) such that the sound is at least partly reflected by the person; detecting the sound output by the at least one loudspeaker (2) and at least partly reflected by the person by the microphone array (3) to obtain microphone signals for each of the M microphones constituting the microphone array (3);

**characterized by**

estimating the impulse responses of the loudspeaker- room - microphone system for at least some of the M microphone signals and beamforming the estimated impulse responses for a number of predetermined directions to obtain $L > M$ beamformed impulse responses;

determining the energy response from the L beamformed impulse responses; and

determining the person's direction towards and/or distance from the microphone array (3) on the basis of the determined energy response.

2. The method according to claim 1, further
generating a direction - distance diagram based on the determined energy responses;
and wherein
the person's (1) direction towards and/or distance from the microphone array (3) is determined on the basis of the direction - distance diagram.

3. The method according to claim 2, further comprising filtering, in particular, by a bandpass filtering means (6), the beamformed impulse responses to obtain filtered beamformed impulse responses and wherein the energy responses are determined from the filtered beamformed impulse responses.

4. The method according to claim 3, further comprising determining local maxima of the direction - distance diagram; and wherein the person's (1) direction towards and/or distance from the microphone array (3) is determined on the basis of the determined local maxima.

5. The method according to claim 3, further comprising generating a reference direction - distance diagram and subtracting the direction - distance diagram and the reference direction - distance diagram from each other to obtain a differential direction - distance diagram; and wherein the person's (1) direction towards and/or distance from the microphone array (3) is determined on the basis of the differential direction - distance diagram.

6. The method according to claim 5, further comprising determining local maxima of the differential direction - distance diagram; and wherein the person's (1) direction towards and/or distance from the microphone array (3) is determined on the basis of the determined local maxima.

7. Communication system adapted for the localization of a person (1); comprising at least one loudspeaker (2) configured to output sound such that the sound is at least partly reflected by the person (1);
a microphone array (3) configured to detect the sound output by the at least one loudspeaker (2) and reflected by the person (1) and to obtain microphone signals for each of the M microphones constituting the microphone array (3);
**characterized by**
a filtering means (6) configured to estimate the impulse responses of the loudspeaker - room - microphone system for at least some of the M microphone signals;
a beamforming means (5) configured to beamform the estimated impulse responses to obtain L > M beamformed impulse responses; and
a processing means (7) configured to determine the energy responses from the L beamformed impulse responses and to determine the person's (1) direction towards and/or distance from the microphone array (3) on the basis of determined energy response.

8. Communication system according to claim 7, wherein the processing means (7) is configured to
generate a direction - distance diagram based on the determined energy responses; and
determine the person's (1) direction towards and/or distance from the microphone array (3) on the basis of the generated direction - distance diagram, in particular, by determining the local maxima in the direction - distance diagram.

9. Handsfree set, audio or video conference system, a speech control means or speech recognition means comprising a communication system according to claim 7 or 8.

**Patentansprüche**

1. Verfahren zur Lokalisierung einer Person (1) in einem Raum, in dem sich zumindest ein Lautsprecher (2) und zumindest eine Mikrofonanordnung (3) befinden, das die Schritte umfasst
Ausgeben von einem Ton durch den zumindest einen Lautsprecher (2), so dass der Ton zumindest teilweise von der Person reflektiert wird; Detektieren des Tons, der durch den zumindest einen Lautsprecher (2) ausgegeben und zumindest teilweise von der Person reflektiert wird, durch die Mikrofonanordnung (3), um Mikrofonsignale für jedes der M Mikrofone zu erhalten, die die Mikrofonanordnung (3) bilden;
**gekennzeichnet durch**

Schätzen der Impulsantworten des Lautsprecher-Raum-Mikrofon-Systems für zumindest einige der M Mikrofonsignale und Beamformen der geschätzten Impulsantworten für eine Anzahl an vorbestimmten Richtungen, um L > M gebeamformte Impulsantworten zu erhalten;
Bestimmen der Energieantwort aus den L gebeamformten Impulsantworten; und
Bestimmen der Richtung der Person bezüglich der Mikrofonanordnung (3) und/oder des Abstands der Person von der Mikrofonanordnung (3) auf der Grundlage der bestimmten Energieantwort.

2. Das Verfahren gemäß Anspruch 1, das weiterhin das Erzeugen eines Richtungs-Abstands-Diagramms auf der Grundlage der bestimmten Energieantworten umfasst;
und in dem
die Richtung der Person (1) bezüglich der Mikrofonanordnung (3) und/oder der Abstand der Person (1) von der Mikrofonanordnung (3) auf der Grundlage des Richtungs-Abstands-Diagramms bestimmt wird.

3. Das Verfahren gemäß Anspruch 2, das weiterhin das Filtern, insbesondere mit einer Bandpassfiltereinrichtung (6), der gebeamformten Impulsantworten, um gefilterte gebeamformte Impulsantworten zu erhalten, umfasst, und in dem die Energieantworten aus den gefilterten gebeamformten Impulsantworten bestimmt werden.

4. Das Verfahren gemäß Anspruch 3, das weiterhin das Bestimmen lokaler Maxima des Richtungs-Abstands-Diagramms umfasst, und in dem die Richtung der Person (1) bezüglich der Mikrofonanordnung (3) und/oder der Abstand der Person (1) von der Mikrofonanordnung (3) auf der Grundlage der bestimmen lokalen Maxima bestimmt wird.

5. Das Verfahren gemäß Anspruch 3, das weiterhin das Erzeugen eines Referenz-Richtungs-Abstands-Diagramms und das Subtrahieren des Richtungs-Abstands-Diagramms und des Referenz-Richtungs-Abstands-Diagramms voneinander umfasst, um ein differentielles Richtungs-Abstands-Diagramms zu erhalten; und in dem die Richtung der Person (1) bezüglich der Mikrofonanordnung (3) und/oder der Abstand der Person (1) von der Mikrofonanordnung (3) auf der Grundlage des differentiellen Richtungs-Abstands-Diagramms bestimmt wird.

6. Das Verfahren gemäß Anspruch 5, das weiterhin das Bestimmen lokaler Maxima des differentiellen Richtungs-Abstands-Diagramms umfasst, und in dem die Richtung der Person (1) bezüglich der Mikrofonanordnung (3) und/oder der Abstand der Person (1) von der Mikrofonanordnung (3) auf der Grundlage der bestimmen lokalen Maxima bestimmt wird.

7. Kommunikationssystem, das zur Lokalisierung einer Person (1) ausgebildet ist und das umfasst
zumindest einen Lautsprecher (2), der dazu ausgebildet ist, einen Ton auszugeben, so dass der Ton zumindest teilweise von der Person (1) reflektiert wird;
eine Mikrofonanordnung (3), die dazu ausgebildet ist, den Ton, der durch den zumindest einen Lautsprecher (2) ausgegeben wird und von der Person (1) reflektiert wird, zu detektieren, und Mikrofonsignale für jedes der M Mikrofone zu erhalten, die die Mikrofonanordnung (3) bilden;
**gekennzeichnet durch**
eine Filtereinrichtung (6), die dazu ausgebildet ist, die Impulsantworten des Lautsprecher-Raum-Mikrofon-Systems für zumindest einige der M Mikrofonsignale zu schätzen;
eine Beamforming-Einrichtung (5), die dazu ausgebildet ist, die geschätzten Impulsantworten zu beamformen, um L > M gebeamformte Impulsantworten zu erhalten; und
eine Verarbeitungseinrichtung (7), die dazu ausgebildet ist, die Energieantworten aus den L gebeamformten Impulsantworten zu bestimmen und die Richtung der Person (1) bezüglich der Mikrofonanordnung (3) und/oder den Abstand der Person (1) von der Mikrofonanordnung (3) auf der Grundlage der bestimmten Energieantwort zu bestimmen.

8. Kommunikationssystem gemäß Anspruch 7, in dem die Verarbeitungseinrichtung (7) dazu ausgebildet ist,
Ein Richtungs-Abstands-Diagramms auf der Grundlage der bestimmten Energieantworten zu erzeugen; und
die Richtung der Person (1) bezüglich der Mikrofonanordnung (3) und/oder den Abstand der Person (1) von der Mikrofonanordnung (3) auf der Grundlage des Richtungs-Abstands-Diagramms, insbesondere durch Bestimmen der lokalen Maxima in dem Richtungs-Abstands-Diagramm, zu bestimmen.

9. Freisprecheinrichtung, Audio- oder Videokonferenzsystem, eine Sprachsteuerungseinrichtung oder Spracherkennungseinrichtung, die oder das ein Kommunikationssystem gemäß Anspruch 7 oder 8 umfasst.

**Revendications**

1. Procédé de localisation d'une personne (1) dans une pièce dans laquelle sont situés au moins un haut-parleur (2) et un réseau de microphones (3), comprenant les étapes consistant à :

    émettre un son en sortie par l'intermédiaire du ou des haut-parleurs (2) de telle sorte que le son soit au moins partiellement réfléchi par la personne,
    détecter le son émis par l'intermédiaire du ou des haut-parleurs (2) et au moins partiellement réfléchi par la personne grâce au réseau de microphones (3) afin d'obtenir des signaux de microphones pour chacun des M microphones constituant le réseau de microphones (3),
    **caractérisé par** :

    l'estimation des réponses impulsionnelles du système haut-parleurs - pièce - microphones pour au moins certains des M signaux de microphones et la formation d'un faisceau constitué des réponses impulsionnelles estimées pour un certain nombre de directions prédéterminées afin d'obtenir L > M réponses impulsionnelles sous forme d'un faisceau,
    la détermination de la réponse énergétique provenant des L réponses impulsionnelles sous forme de faisceau, et
    la détermination de la direction de la personne vers le réseau de microphones (3) et/ou la distance par rapport à celui-ci sur la base de la réponse énergétique déterminée.

2. Procédé selon la revendication 1 comprenant en outre :

    la génération d'un diagramme direction - distance fondé sur les réponses énergétiques déterminées,
    et dans lequel
    la direction de la personne (1) vers le réseau de microphones (3) et/ou la distance par rapport à celui-ci est déterminée sur la base du diagramme direction - distance.

3. Procédé selon la revendication 2, comprenant en outre un filtrage, en particulier grâce à un moyen de filtrage passe bande (6), des réponses impulsionnelles sous forme de faisceau afin d'obtenir des réponses impulsionnelles sous forme de faisceau et filtrées ; et dans lequel les réponses énergétiques sont déterminées à partir des réponses impulsionnelles sous forme de faisceau et filtrées.

4. Procédé selon la revendication 3, comprenant en outre la détermination de valeurs maximales locales du diagramme direction - distance ; et dans lequel la direction de la personne (1) vers le réseau de microphones (3) et/ou la distance par rapport à celui-ci est déterminée sur la base des valeurs maximales locales déterminées.

5. Procédé selon la revendication 3, comprenant en outre la génération d'un diagramme direction - distance de référence et la soustraction l'un de l'autre du diagramme direction - distance et du diagramme direction - distance de référence afin d'obtenir un diagramme différentiel direction - distance ; et dans lequel la direction de la personne (1) vers le réseau de microphones (3) et/ou la distance par rapport à celui-ci est déterminée sur la base du diagramme différentiel direction - distance.

6. Procédé selon la revendication 5, comprenant en outre la détermination de valeurs maximales locales du diagramme différentiel direction - distance ; et dans lequel la direction de la personne (1) vers le réseau de microphones (3) et/ou la distance par rapport à celui-ci est déterminée sur la base des valeurs maximales locales déterminées.

7. Système de communication conçu pour la localisation d'une personne (1) ; comprenant :

    au moins un haut-parleur (2) configuré pour émettre en sortie un son de telle sorte que le son soit au moins partiellement réfléchi par la personne (1),
    un réseau de microphones (3) configuré pour détecter le son émis par le ou les haut-parleurs (2) et réfléchi par la personne et pour récupérer des signaux de microphones pour chacun des M microphones constituant le réseau de microphones (3),
    **caractérisé par**
    un moyen de filtrage (6) configuré pour réaliser une estimation des réponses impulsionnelles du système haut-parleurs - pièce - microphones pour au moins certains des M signaux de microphones,
    un moyen de formation d'un faisceau (5) configuré pour former un faisceau constitué des réponses impulsion-

EP 1 983 799 B1

nelles estimées afin d'obtenir L > M réponses impulsionnelles sous forme d'un faisceau, et
un moyen de traitement (7) configuré pour déterminer les réponses énergétiques provenant des L réponses impulsionnelles sous forme de faisceau et pour déterminer la direction de la personne (1) vers le réseau de microphones (3) et/ou la distance par rapport à celui-ci sur la base de la réponse énergétique déterminée.

8. Système de communication selon la revendication 7, dans lequel le moyen de traitement (7) est configuré pour :

générer un diagramme direction - distance fondé sur les réponses énergétiques déterminées, et
déterminer la direction de la personne (1) vers le réseau de microphones (3) et/ou la distance par rapport à celui-ci sur la base du diagramme direction - distance généré, en particulier en déterminant les valeurs locales maximales dans le diagramme direction - distance.

9. Combiné mains libre, système de conférence audio ou vidéo, moyen de commande de la parole ou moyen de reconnaissance de la parole comprenant un système de communication conforme à la revendication 7 ou 8.

FIG. 1

# FIG. 2

FIG. 3

FIG. 4

| output audio signal by loudspeaker | ~100 |
| detect sound by microphone array | ~110 |
| estimate impulse responses | ~120 |
| beam form impulse responses | ~130 |
| calculate and smooth energy responses | ~140 |
| generate direction-distance diagram | ~150 |
| generate differential direction-distance diagram | ~160 |
| determine local maxima | ~170 |

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006011650 A2
- EP 1544635 A1
- JP 20027078545 B
- EP 1020068 B1

### Non-patent literature cited in the description

- **B.D. VAN VEEN ; K.M. BUCKLEY.** Beamforming: a versatile approach to spatial filtering. *IEEE ASSP Magazine,* April 1988, vol. 5 (2), 4-24
- Adaptive beamforming for audio signal acquisition. **HERBORDT, W. ; KELLERMANN, W.** Adaptive signal processing: applications to real-world problems. Springer, 2003, 155
- **E. HÄNSLER ; G. SCHMIDT.** Acoustic echo and noise control: a practical approach. John Wiley & Sons, 2004